# EUROPÄISCHE PATENTSCHRIFT

(11) **EP 2 875 993 B1**
(45) Veröffentlichungstag und Bekanntmachung des Hinweises auf die Patenterteilung: **30.01.2019**
(21) Anmeldenummer: 14003295.4
(22) Anmeldetag: 24.09.2014
(51) Int. Cl.: B60P 1/64

(54) **Verfahrbare Vorrichtung zum Bewegen von Transportbehältern**
Mobile device for moving transport containers
Dispositif mobile destiné à déplacer des conteneurs de transport

(30) Priorität: 26.11.2013 DE 102013019841
(43) Veröffentlichungstag der Anmeldung: 27.05.2015
(73) Patentinhaber: Heinz Bergmann e.Kfm. Maschinen für die Abfallwirtschaft, 49762 Lathen (DE)
(72) Erfinder: Heinz, Bergmann, 49762 Lathen (DE)
(74) Vertreter: Philipp, Matthias

(56) Entgegenhaltungen:
- CH-A- 363 939
- DE-A1- 2 200 879
- DE-A1-102011 057 043
- DE-U1-202007 017 616
- US-A- 3 591 025

## Beschreibung

Die Erfindung betrifft eine verfahrbare Vorrichtung zum Bewegen von endseitig mit einer Kopplungseinrichtung versehenen Transportbehältern, wie sie etwa aus der DE 20 2007 017 616 U1 bekannt ist. Die bekannte Vorrichtung ist mit einem Fahrgestell und einem an diesem schwenkbar gelagerten Haken versehen, der von einer abgesenkten Ruhestellung in eine angehobene bzw. hochgeschwenkte Aufnahmestellung bringbar ist, in der er mit einer Kopplungseinrichtung eines zu bewegenden Transportbehälters in Eingriff bringbar ist.

DE 10 2011 057043 A1 offenbart eine gattungsgemäße verfahrbare Vorrichtung.

Obwohl sich die bekannte Vorrichtung in der Praxis bewährt hat, kann der Eingriff des Hakens in die Kopplungseinrichtung des Transportbehälters bei größeren Winkeln zwischen einer Längsachse der Vorrichtung und einer Längsachse des Transportbehälters (bei enger Kurvenfahrt bzw. Lenkeinschlag der Vorrichtung) problematisch sein und zu einem Verklemmen, starkem Verschleiß oder sogar zu Beschädigungen an Haken oder Kopplungseinrichtung führen.

Die Aufgabe der vorliegenden Erfindung besteht darin, auch bei größeren Winkeln zwischen einer Längsachse der verfahrbaren Vorrichtung und einer Längsachse eines zu bewegenden Transportbehälters einen sicheren und verschleiß- und beschädigungsfreien Eingriff zwischen Haken und Kopplungseinrichtung zu gewährleisten.

Diese Aufgabe wird erfindungsgemäß durch eine verfahrbare Vorrichtung zum Bewegen von endseitig mit einer Kopplungseinrichtung versehen Transportbehältern gelöst, mit einem Fahrgestell, an dem mindestens ein mittels eines Antriebs antreibbares Rad und mindestens ein mittels einer Lenkeinrichtung steuerbares Rad angeordnet sind, und einer an dem Fahrgestell gehaltenen, zwischen einer Ruhestellung und einer Aufnahmestellung um eine horizontale Schwenkachse verschwenkbaren Hakeneinrichtung, wobei sich die Vorrichtung erfindungsgemäß dadurch auszeichnet, dass die Hakeneinrichtung einen um die Schwenkachse verschwenkbaren Aufnahmearm mit einem daran um eine Drehachse drehbar gehaltenen Aufnahmehaken aufweist, wobei die Drehachse senkrecht zu und in einem Abstand von der Schwenkachse angeordnet ist.

Diese Anordnung ermöglichst einen Winkelausgleich zwischen der Vorrichtung und dem Transportbehälter, indem sich der Aufnahmehaken relativ zu den Aufnahmearm verdrehen und zumindest teilweise mit dem Transportbehälter ausrichten kann.

Die Drehachse ist ortsfest bezüglich des Aufnahmearms angeordnet, wobei sie sich bei einer Verschwenkbewegung des Aufnahmearms mit diesem verschwenkt.

Alternativ kann vorgesehen sein, dass der Aufnahmearm von zwei parallel angeordneten und an dem Fahrgestell schwenkbar angelenkten Parallellogrammlenkern und einem an den Parallellogrammlenkern angelenkten Tragkörper gebildet ist, wobei die Drehachse an dem Tragkörper angeordnet ist. In diesem Fall bleibt die Drehachse bei einer Schwenkbewegung der Parallellogrammlenker in einer vorgegebenen Ausrichtung.

Es kann vorgesehen sein, dass die Drehachse in der Aufnahmestellung vertikal oder unter einem Winkel von bis zu 5°, 10°, 20°, 30° oder 45° zur Vertikalen angeordnet ist. Bei Ausführung des Aufnahmearms als Paar von Parallellogrammlenkern kann vorgesehen sein, dass die Drehachse stets vertikal angeordnet ist.

In einer Ausführungsform der Vorrichtung als Abrollkipperfahrzeug kann vorgesehen sein, dass die Hakeneinrichtung auf oder benachbart zu einer horizontalen Plattform der Vorrichtung zum Ziehen eines Transportbehälters auf die Plattform angeordnet ist.

Weiterhin kann vorgesehen sein, dass eine Verdichterwalze gelenkig an der Vorrichtung gelagert ist und in einen offenen Transportbehälter bringbar und in diesem hin- und herbewegbar ist.

Die Hakeneinrichtung kann in einem Frontbereich und/oder in einem Heckbereich der Vorrichtung angeordnet sein. Es kann vorgesehen sein, dass auf dem Fahrgestell eine Fahrerkabine angeordnet ist, von der aus die im Frontbereich der Vorrichtung angeordnete Hakeneinrichtung zumindest in der Aufnahmestellung von einem sitzenden Fahrer sichtbar ist, zumindest deren Aufnahmehaken.

Vorteilhaft kann vorgesehen sein, dass der Aufnahmehaken bezüglich einer Drehung um die Drehachse eine Neutralstellung aufweist, in der er bzw. seine Längsmittelebene mit dem Aufnahmearm bzw. mit der Längsachse der Vorrichtung fluchtet, wobei ein insbesondere federbetätigtes Rückstellmittel zwischen dem Aufnahmearm und dem Aufnahmehaken angeordnet ist, das bei einer Verdrehung des Aufnahmehakens eine Rückstellkraft in Richtung auf die Neutralstellung auf den Aufnahmehaken aufbringt.

Die Erfindung sieht weiterhin bevorzugt vor, dass der Aufnahmehaken einen Hakenkörper und einen damit verbundenen und ein Hakenmaul mit einer Aufnahmeöffnung bildenden Hakenarm aufweist, Die Aufnahmeöffnung kann in der Aufnahmestellung der Hakeneinrichtung in eine von dem Fahrgestell abgekehrte Richtung weisen.

Der Aufnahmehaken kann einen Lastaufnahmebereich aufweisen, der durch eine Oberseite des Hakenarms und ggf. zusätzlich durch eine Innenfläche des Hakenkörpers gebildet ist. Die Drehachse kann durch den Lastaufnahmebereich oder mit Abstand von dem Lastaufnahmebereich an einem Punkt zwischen diesem und der Schwenkachse verlaufen.

Weitere Vorteile und Merkmale der Erfindung ergeben sich aus der nachfolgenden Beschreibung von Ausführungsbeispielen, wobei auf eine Zeichnung Bezug genommen wird, in der
Fig. 1 eine eine erste Ausführungsform einer verfahrbaren Vorrichtung in Form eines Abrollkipperfahrzeugs zeigt, wobei sich eine verschwenkbare Hakeneinrichtung in einer Ruhestellung befindet,
Fig. 2 die Vorrichtung nach Fig. 1 zeigt, wobei sich die Hakeneinrichtung in einer Zwischen- und einer Arbeitsstellung befindet,
Fig. 3 eine schematische Seitenansicht einer zweiten Ausführungsform einer verfahrbaren Vorrichtung mit Verdichterwalze zeigt, bei der sich eine verschwenkbare Hakeneinrichtung in einer abgesenkten Ruhestellung befindet,
Fig. 4 eine Seitenansicht einer dritten Ausführungsform entsprechend der zweiten Ausführungsform, jedoch ohne Verdichterwalze zeigt,
Fig. 5 eine schematische Draufsicht auf die Vorrichtung nach Fig. 4 zeigt, mit in Arbeitsstellung befindlicher und einem Transportbehälter gekoppelten Hakeneinrichtung,
Fig. 6 einen vergrößerten Ausschnitt aus Fig. 5 zeigt,
Fig. 7 eine Seitenansicht eines vorderen Bereichs der Vorrichtung nach der dritten Ausführungsform mit der Hakeneinrichtung in Arbeitsstellung zeigt,
Fig. 8 eine perspektivische Ansicht der Hakeneinrichtung der zweiten und dritten Ausführungsform zeigt, und
Fig. 9 eine schematische Seitenansicht einer Modifikation der dritten Ausführungsform zeigt.

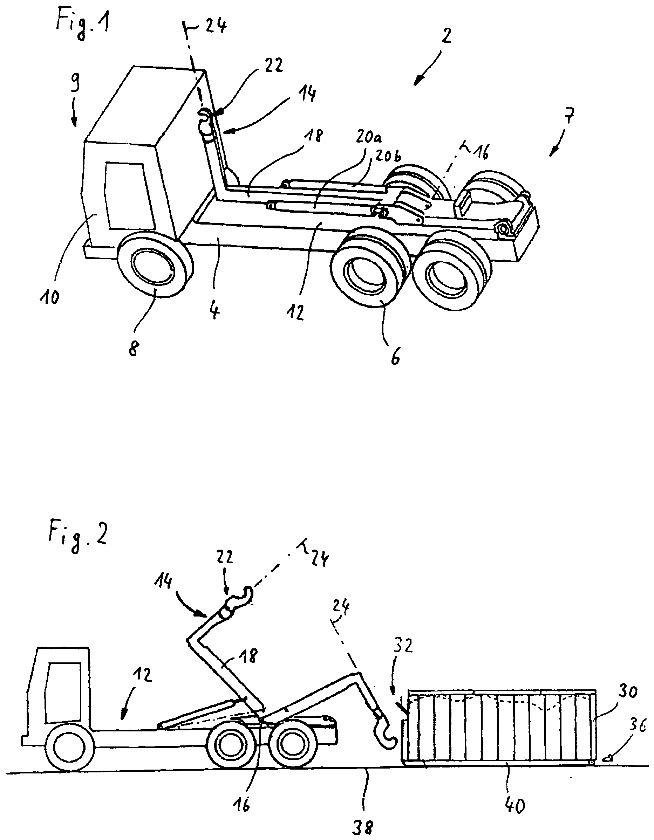

Eine erste Ausführungsform ist in Fig. 1 und 2 dargestellt. Bei der Vorrichtung handelt es sich um ein sogenanntes Abrollkipperfahrzeug 2 mit einem Fahrgestell 4 mit angetriebenen Hinterrädern 6 in einem Heckbereich 7 und lenkbaren Vorderrädern 8 in einem Frontbereich 9, einem nicht dargestellten Antrieb, einem Führerhaus 10 und einer im Wesentlichen ebenen heckseitigen Lastaufnahmefläche oder Plattform 12. An dem Fahrgestell 4 ist eine verschwenkbare Hakeneinrichtung 14 angebracht, die einen L-förmigen, um eine horizontale Schwenkachse 16 verschwenkbaren Aufnahmearm 18 aufweist, dessen Schwenkbewegung über zwei hydraulische Kolben-/Zylindereinheiten 20a, b steuerbar ist, die einerseits am Fahrgestell 4 und andererseits am Aufnahmearm 18 angelenkt sind. Der Aufnahmearm 18 trägt an einem freien Ende einen Aufnahmehaken 22, der um eine Drehachse 24 relativ zu dem Aufnahmearm 18 verdrehbar ist. Die Drehachse 23 verläuft senkrecht zu und in einem Abstand von der Schwenkachse 16, um die der Aufnahmearm 18 an dem Fahrgestell 4 angelenkt ist.

Während Fig. 1 eine eingezogene Ruhestellung der Hakeneinrichtung 14 zeigt, in der ein Teil des Aufnahmearms 18 auf der Plattform 12 aufliegt, zeigt Fig. 2 zwei unterschiedliche Stellungen der Hakeneinrichtung 14. Einerseits ist eine Zwischenstellung dargestellt, in der sich der Aufnahmearm 18 um ca. 45° gegenüber der Ruhestellung nach Fig. 1 hochgeschwenkt befindet, und weiterhin eine ausgefahrene Aufnahmestellung, in der der Aufnahmearm 18 gegenüber der Ruhestellung um etwa 150° verschwenkt ist und der Aufnahmehaken 22 zur Aufnahme eines Transportbehälters geeignet positioniert ist. In der dargestellten Aufnahmestellung steht die Drehachse 24 des Aufnahmehakens 22 näherungsweise vertikal und ist in der dargestellten Ausführungsform um ca. 25° zur Vertikalen geneigt.

Hinter dem Abrollkipperfahrzeug 2 ist ein zu bewegender Transportbehälter 30 dargestellt, der an einem Ende mit einer Kopplungseinrichtung 32 versehen ist, mit der der Aufnahmehaken 22 in Eingriff gebracht werden kann. Die Kopplungseinrichtung 32 kann in bekannter Weise durch eine Rundöse aus einem im Wesentlichen halbrund gebogenen Material runden Querschnitts gebildet sein, die mit einer Stirnwand des Transportbehälters 30 fest verbunden ist. Der Transportbehälter 20 weist an seiner der Kopplungseinrichtung 32 gegenüberliegenden Seite Rollen 36 auf, mit denen er auf einem Untergrund 38 abrollen kann, wenn er einseitig auf der Seite der Kopplungseinrichtung 32 angehoben ist.

Daneben weist der Transportbehälter 30 unterseitige Kufen 40 auf, mit denen er auf dem Untergrund 38 ruht.

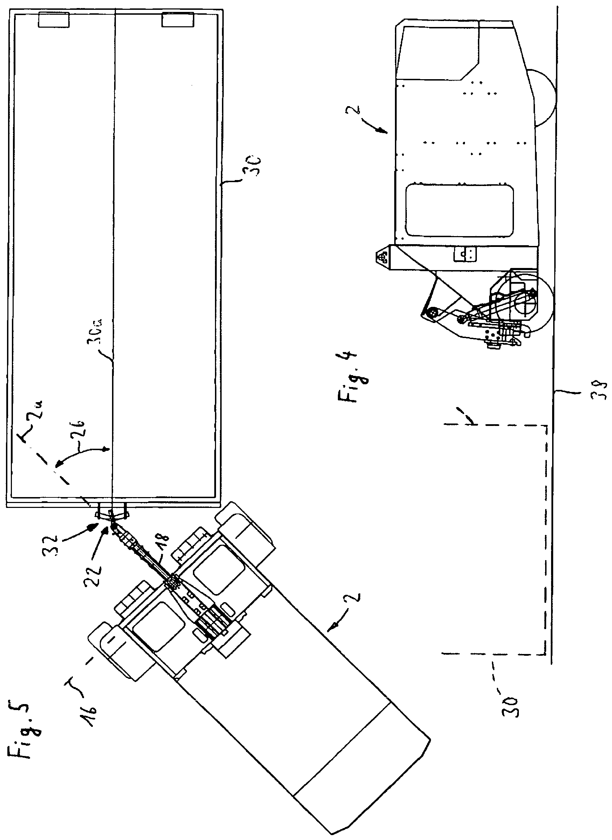

Der Transportbehälter 30 ist in an sich bekannter Weise von dem Abrollkipperfahrzeug 2 aufnehmbar, in dem der Aufnahmehaken 22 mit der Kopplungseinrichtung 32 bzw. Öse in Eingriff gebracht wird und der Transportbehälter 30 anschließend durch Verschwenken des Aufnahmearms 18 über die in Fig. 2 gezeigte Zwischenstellung bis in die in Fig. 1 dargestellte Ruhestellung auf die Plattform 12 gezogen wird. Da es bei diesem Vorgang, insbesondere im Laufe des In-Eingriff-Bringens des Aufnahmehakens 22 mit der Kupplungseinrichtung 32, häufig vorkommt, dass das Abrollkipperfahrzeug 2 nicht mit dem Transportbehälter 30 ausgerichtet ist, wobei eine Längsachse 2a der Vorrichtung einen Winkel von bis zu 10 °, 20°, 30°, 45° oder auch mehr mit einer Längsachse 30a des Transportbehälters 30 einschließt (s.a. Fig. 5), kann sich ein ungünstiger Eingriff des Aufnahmehakens 22 in die Kopplungseinrichtung 32 oder ein Verklemmen ergeben. Verschleiß und Beschädigungen können die Folge sein.

Um dem abzuhelfen, ist der Aufnahmehaken 22 um die Drehachse 24 relativ zu dem Aufnahmearm 18 verdrehbar, so dass ein Ausgleich einer eventuellen Winkelstellung zwischen dem Abrollkipperfahrzeug 2 und dem Transportbehälter 30 erfolgen kann. Dadurch, dass sich der Aufnahmehaken 22 verdrehen kann, kann er eine Winkelstellung einnehmen, in der er günstig mit der Kopplungseinrichtung 32 zusammenwirkt, so dass Beschädigungen oder übermäßiger Verschleiß ausgeschlossen sind.

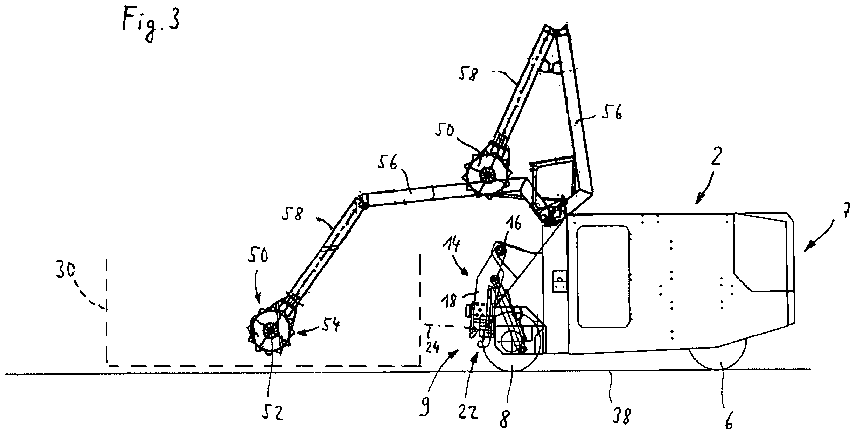

Fig. 3 bis 8 erläutern eine zweite und dritte Ausführungsform. Die verfahrbare Vorrichtung ist in diesen Fällen nicht als Abrollkipperfahrzeug ausgeführt, sondern als Fahrzeug zur Bewegung von Transportbehältern, bevorzugt versehen mit einer Vorrichtung zum Verdichten von Müll, sofern es sich bei den Transportbehältern um oben offene Aufnahmebehälter für Abfallstoff oder Müll handelt (zweite Ausführungsform nach Fig. 3).

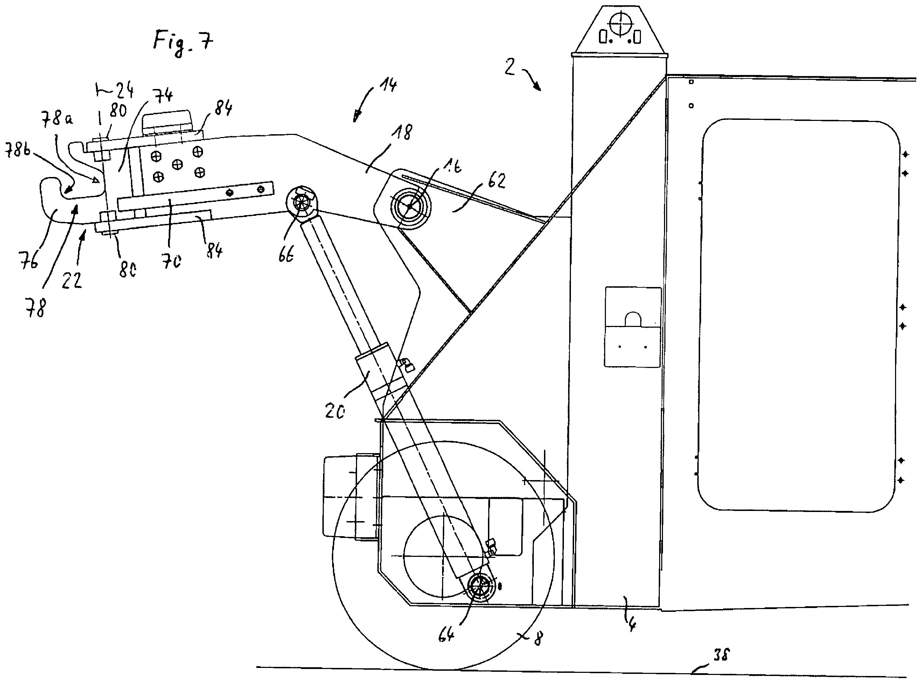

Die in Fig. 3 dargestellte Vorrichtung zum Bewegen eines gestrichelt dargestellten Transportbehälters 30 weist ein Fahrgestell 4 und ein Führerhaus 10 auf, mit angetriebenen Hinterrädern 6 und lenkbaren Vorderrädern 8. Alternativ können die Hinterräder 6 lenkbar und die Vorderräder 8 antreibbar sein. Im Frontbereich 9 der Vorrichtung ist eine verschwenkbare Hakeneinrichtung 14 angeordnet, mit einem um eine horizontale Schwenkachse 16 verschwenkbaren Aufnahmearm 18, der einen Aufnahmehaken 22 trägt. Die Schwenkachse 16 ist am Fahrgestell 4 gehalten. Fig. 3 zeigt eine absenkte oder eingezogene Ruhestellung der Hakeneinrichtung 14. Zwischen dem Aufnahmearm 18 und dem Fahrgestell 4 wirkend ist eine Kolben-/Zylindereinheit 20 angeordnet, mit der der Aufnahmearm 18 in eine in Fig. 7 dargestellte angehobene oder ausgefahrene Aufnahmestellung gebracht werden kann. Sowohl der Aufnahmearm 18 als auch die Kolben-/Zylindereinheit 20 können mit dem Fahrgestell 4 lösbar verbunden sein, beispielsweise mittels Bolzen.

Fig. 3 zeigt weiter, dass an dem Fahrgestell 4 eine Verdichterwalze 50 gelenkig gelagert ist, die in den Transportbehälter 30 bewegt werden kann. Die Verdichterwalze 50 ist um eine horizontale Achse 52 antreibbar und weist an ihrer zylindrischen Außenfläche Mitnehmer oder Zerkleinerungsvorsprünge 54 auf. Mit Hilfe eines ersten, am Fahrgestell 4 angelenkten Gelenkarms 56 und eines mit diesem gelenkig verbundenen zweiten Gelenkarms 58, der an seinem freien Ende die Verdichterwalze 50 trägt, kann diese in dem Transportbehälter 30 hin- und herbewegt werden, wodurch das darin befindliche Abfallgut komprimiert und zerkleinert wird. Fig. 3 zeigt zwei Stellungen der Verdichterwalze 50, eine Ruhestellung, in der sich die Gelenkarme 56, 58 und die Verdichterwalze 50 im Wesentlichen über dem Frontbereich und der Hakeneinrichtung 14 der Vorrichtung befinden, und eine Arbeitsstellung, in der sich die Verdichterwalze 50 in dem Transportbehälter 30 befindet und die Gelenkarme 50, 58 eine im wesentlichen gestreckte Stellung einnehmen.

Fig. 4 zeigt als dritte Ausführungsform eine der Fig. 3 entsprechende Vorrichtung, lediglich ohne Verdichterwalze 50, wobei sich ein Transportbehälter 30 in einem solchen Abstand vor der Vorrichtung befindet, dass dann, wenn der Aufnahmearm 18 aus der dargestellten Ruhestellung in die Aufnahmestellung geschwenkt wird, der am Ende des Aufnahmearms 18 befindliche Aufnahmehaken 22 mit der Kopplungseinrichtung 32 in Form einer Öse in Eingriff gebracht werden kann.

Fig. 5 zeigt eine solche Eingriffssituation in einer Draufsicht, wobei die Besonderheit besteht, dass eine Längsachse 2a der Vorrichtung einen erheblichen Winkel 26 mit einer Längsachse 30a des Transportbehälters 30 bildet, so dass ein Eingriff eines starr mit dem Aufnahmearm 18 verbundenen Aufnahmehakens 22 in die Kopplungseinrichtung oder Öse 32 schwierig wäre. Zur Lösung dieses Problems ist der Aufnahmehaken 22 um die Drehachse 24 drehbar an dem Aufnahmearm 18 gehalten, ähnlich wie bereits im Zusammenhang mit Fig. 1 und 2 erläutert worden ist.

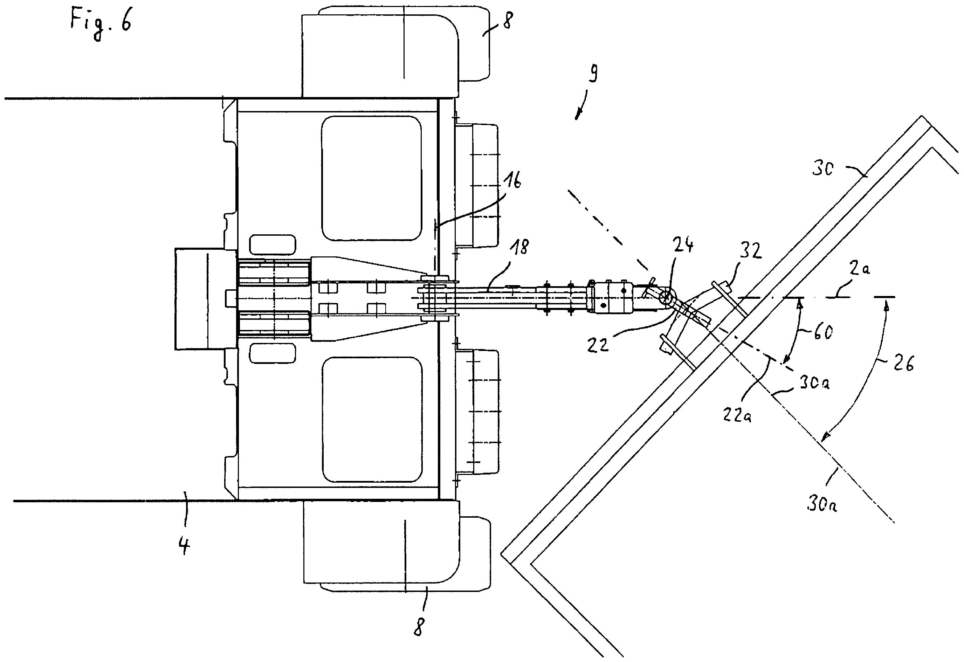

Fig. 6 zeigt eine vergrößerte Ausschnittsdarstellung des Eingriffsbereichs zwischen Aufnahmehaken 22 und Öse 32 gemäß Fig. 5, wobei eine Verdrehung des Aufnahmehakens 22 mit Längsmittelebene 22a um die Drehachse 24, die in diesem Fall im Wesentlichen vertikal steht, relativ zu dem Aufnahmearm 18 bzw. der Längsachse 2a um einen Winkel 60 bezüglich einer unverdrehten, mit dem Aufnahmearm 18 bzw. der Längsachse 2a fluchtenden Ausgangsstellung deutlich erkennbar ist.

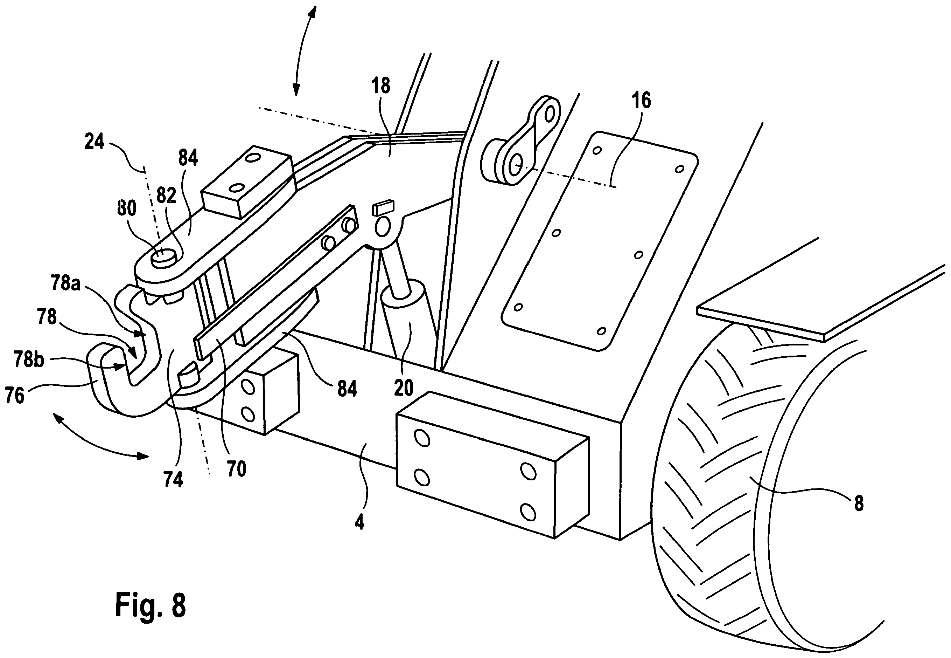

Fig. 7 und 8 erläutern den Aufbau der verschwenkbaren Hakeneinrichtung 14 mehr im Einzelnen. Ein Befestigungsansatz 62 an dem Fahrgestell 4 der Vorrichtung 2 trägt die horizontale Schwenkachse 16, um die der Aufnahmearm 18 schwenkbar angelenkt ist. Eine oder bedarfsweise auch zwei Kolben-/Zylindereinheit(en) 20 erstreckt sich zwischen einem ersten Anlenkpunkt 64 am Fahrgestell 4 und einem zweiten Anlenkpunkt 66 an dem Aufnahmearm 18, der sich zwischen der Schwenkachse 16 und dem Aufnahmehaken 22 befindet. An einem vorderen, der Schwenkachse 16 gegenüberliegenden Ende des Aufnahmearms 18 ist der Aufnahmehaken 22 um eine Drehachse 24 drehbar gehalten, wobei sich die Drehachse 24 in einer Vertikalebene oder senkrecht zu der horizontalen Schwenkachse 16 befindet.

Fig. 7 und 8 zeigen einen angehobenen oder ausgefahrenen Arbeitszustand der Hakeneinrichtung 14, in dem die Drehachse 24 im Wesentlichen vertikal ausgerichtet ist und bevorzugt einen Winkel von weniger als 45°, 30° 20° oder 10° zur Vertikalen bildet.

Da es zweckmäßig ist, wenn der Aufnahmehaken 22 mit seiner Längsmittelebene 22a vor einem Eingriff in eine Kopplungseinrichtung eines Transportbehälters eine unverdrehte, mit dem Aufnahmearm 18 oder der Längsachse 2a fluchtende Ausrichtung oder Neutralstellung einnimmt, die in Fig. 7 und 8 dargestellt ist, ist bevorzugt ein Rückstellmittel vorgesehen, das den Aufnahmehaken 22 im unbelasteten Zustand in die Neutralstellung zurückbewegt. Fig. 6 und 7 zeigen eine Variante eines derartigen Rückstellmittels in Form von zwei beiderseits des Aufnahmearms 18 angebrachten Federzungen 70, die von beiden Seiten gegen den Aufnahmehaken 22 anliegen und eine elastische Rückstellkraft ausüben, sobald der Aufnahmehaken aus der Neutralstellung verdreht wird.

Der Aufnahmehaken 22 weist einen Hakenkörper 74 auf, von dem ein Hakenarm 76 abgeht. Ein Lastaufnahmebereich 78 ist durch eine zumindest bereichsweise oder punktuell horizontale Oberfläche an der Oberseite des Hakenarms 76 gebildet. Der Lastaufnahmebereich 78 kann darüber hinaus seitlich benachbarte Flächen des Hakenarms 76 und des Hakenkörpers 74 umfassen und insgesamt vertikal nach oben gesehen konkav oder sattelförmig ausgebildet sein.

An dem Hakenkörper 74 sind zwei Lagerzapfen 80 ausgebildet, die mit der Drehachse 24 fluchten und in jeweils eine Lageröffnung 82 eines Lagerarms 84 eingreifen, wobei die Lagerarme 84 ihrerseits an dem Aufnahmearm 18 gehalten sind.

Die Lagerzapfen 80 legen mit den Lageröffnungen 82 die Drehachse 84 fest, die gemeinsam mit dem Aufnahmearm 18 verschwenkt wird.

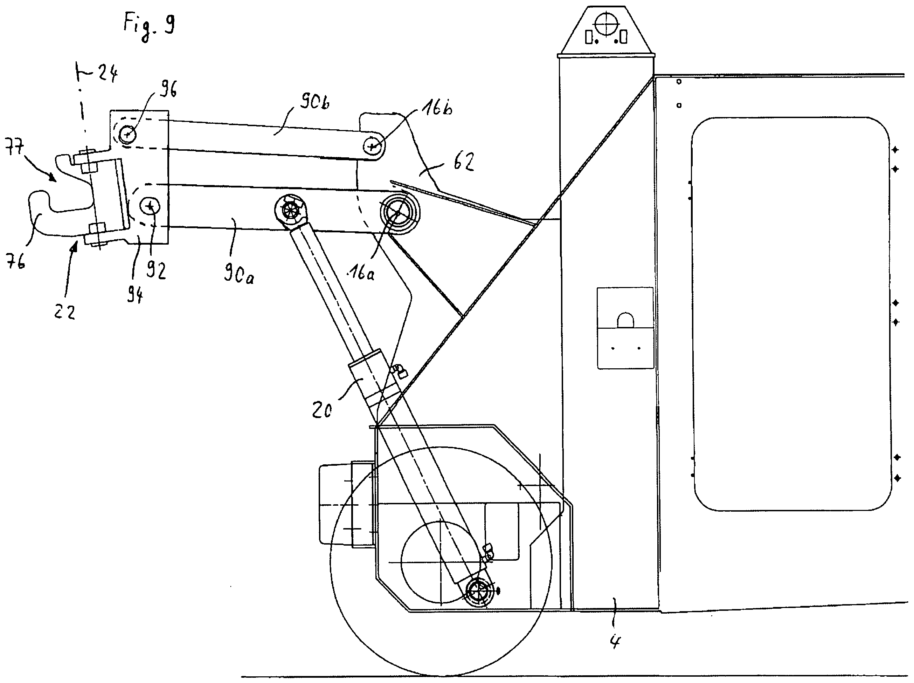

Um zu vermeiden, dass die Drehachse 24 in Abhängigkeit von der Ausfahrstellung bzw. in Abhängigkeit davon, wie weit der Aufnahmearm 18 in der Arbeitsstellung ausgeschwenkt oder angehoben ist, unterschiedlich stark zur Vertikalen geneigt ist, kann gemäß der in Fig. 9 dargestellten Variante der Aufnahmearm 18 durch zwei Parallellogrammlenker 90a, b gebildet werden. Ein erster, unterer Parallellogrammlenker 90a ist einerseits über eine horizontale Schwenkachse 16a am Fahrgestell 4 angelenkt und am gegenüberliegenden Ende über eine horizontale Schwenkachse 92 mit einem Tragkörper 94 gelenkig verbunden. Ein zweiter Parallellogrammlenker 90b ist an einer horizontalen Schwenkachse 16b am Fahrgestell 4 angelenkt und an seinem anderen Ende über eine horizontale Schwenkachse 96 mit dem Tragkörper 94 gelenkig verbunden. Eine wirksame Länge des ersten Parallellogrammlenkers 90a, entsprechend einem Abstand zwischen der Schwenkachse 16a und der Schwenkachse 92, ist bevorzugt gleich groß wie eine wirksame Länge des zweiten Parallellogrammlenkers 90b entsprechend einem Abstand zwischen der Schwenkachse 16b und der Schwenkachse 96. Ein Abstand zwischen den Schwenkachsen 16a, b einerseits ist bevorzugt gleich groß wie ein Abstand zwischen den Schwenkachsen 92, 96 am Tragkörper 94, und eine die Schwenkachsen 16a, b am Fahrgestell enthaltene Ebene ist bevorzugt parallel zu einer die Schwenkachsen 92, 96 am Tragkörper enthaltene Ebene. Auf diese Weise kann sichergestellt werden, dass sich die Drehachse 24 des Aufnahmehakens 22 bei einer Schwenkbewegung der Parallellogrammlenker 90a, b zwischen einer abgesenkten oder eingefahrenen Ruhestellung und einer angehobenen oder ausgefahrenen Arbeitsstellung, die in Fig. 9 dargestellt ist, nicht oder nur geringfügig verändert und bevorzugt stets vertikal ist.

Wie Fig. 7 und 8 zeigen, kann sich der Lastaufnahmebereich 78 des Aufnahmehakens 22 zwischen einem ersten, dem Aufnahmearm 18 zugekehrten Endbereich 78a und einem zweiten, von dem Aufnahmearm 18 abgekehrten Endbereich 78b erstrecken, wobei der zweite Endbereich 78b in einem Abstand von der Drehachse 24 angeordnet ist und der erste Endbereich 78a auf der Drehachse 24 oder zwischen der Drehachse 24 und der Schwenkachse 16 angeordnet sein kann. Eine solche Anordnung hat den Zweck, dass bei einem Zugvorgang eines Transportbehälters 30, bei dem sich die Vorrichtung 2 rückwärts, mit dem Heckbereich 7 voran, bzw. gemäß Fig. 7 nach rechts bewegt, die auf den Aufnahmehaken 22 wirkende Zugkraft von dem Fahrgestell weg gerichtet ist und damit den Haken tendenziell in Richtung seiner Neutralstellung ausrichtet, während bei einem Schiebebetrieb, bei dem sich die Vorrichtung 2 vorwärts, mit ihrem Frontbereich 9 voran bzw. in Fig. 7 nach links bewegt, die auf den Aufnahmehaken 22 in Richtung des Fahrgestells wirkende Druckkraft aufgrund ihrer Einleitung entweder an der Drehachse 24 oder an einem zwischen Drehachse 24 und Schwenkachse 16 liegenden Punkt ebenfalls dazu neigt, den Aufnahmehaken 22 in seiner Normalstellung auszurichten. Zur Erzielung dieser Wirkung kann die Drehachse 24 auch im Wesentlichen mittig durch den Lastaufnahmebereich 78, zwischen dem ersten Endbereich 78a und dem zweiten Endbereich 78b, verlaufen.

**Bezugszeichenliste**

| | | | |
|---|---|---|---|
| 2 | Abrollkipperfahrzeug (verfahrbare Vorrichtung) | 60 | Winkel (zwischen 22 und 18) |
| 2a | Längsachse (von 2) | 62 | Befestigungsansatz |
| 4 | Fahrgestell | 64 | erster Anlenkpunkt |
| 6 | Hinterrad (antreibbares Rad) | 66 | zweiter Anlenkpunkt |
| 7 | Heckbereich | 70 | Federzunge (Rückstellmittel) |
| 8 | Vorderrad (steuerbares Rad) | 74 | Hakenkörper |
| 9 | Frontbereich | 76 | Hakenarm |
| 10 | Führerhaus | 77 | Hakenmaul |
| 12 | Plattform | 78 | Lastaufnahmebereich |
| 14 | Hakeneinrichtung | 78a | erster Endbereich |
| 16 | Schwenkachse | 78b | zweiter Endbereich |
| 16a, b | Schwenkachse | 80 | Lagerzapfen |
| 18 | Aufnahmearm | 82 | Lageröffnung |
| 20 | Kolben-/Zylindereinheit | 84 | Lagerarm |
| 20a, b | Kolben-/Zylindereinheit | 90a, b | Parallellogrammlenker |
| 22 | Aufnahmehaken | 92 | Schwenkachse |
| 22a | Längsmittelebene (von 22) | 94 | Tragkörper |
| 24 | Drehachse | 96 | Schwenkachse |
| 26 | Winkel (zwischen 2a und 30a) | | |
| 30 | Transportbehälter | a | Abstand (24 von 16) |
| 30a | Längsachse (von 30) | | |
| 32 | Kopplungseinrichtung (Öse) | | |
| 36 | Rolle | | |
| 38 | Untergrund | | |
| 40 | Kufe | | |
| 50 | Verdichterwalze | | |
| 52 | Drehachse | | |
| 54 | Zerkleinerungsvorsprung | | |
| 56 | erster Gelenkarm | | |
| 58 | zweiter Gelenkarm | | |

## Patentansprüche

1. Verfahrbare Vorrichtung (2) zum Bewegen von endseitig mit einer Kopplungseinrichtung (32) versehenen Transportbehältern (30), mit einem Fahrgestell (4), an dem mindestens ein mittels eines Antriebs antreibbares Rad (6) und mindestens ein mittels einer Lenkeinrichtung steuerbares Rad (8) angeordnet sind, und einer an dem Fahrgestell (4) gehaltenen, zwischen einer Ruhestellung und einer Aufnahmestellung um eine horizontale Schwenkachse (16) verschwenkbaren Hakeneinrichtung (14), wobei die Hakeneinrichtung (14) einen um die Schwenkachse (16) verschwenkbaren Aufnahmearm (18) mit einem daran um eine Drehachse (24) drehbar gehaltenen Aufnahmehaken (22) aufweist und die Drehachse (24) senkrecht zu und in einem Abstand von der Schwenkachse (16) angeordnet ist, **dadurch gekennzeichnet, dass** die Drehachse (24) ortsfest bezüglich des Aufnahmearms (18) angeordnet ist.

2. Vorrichtung nach Anspruch 1, **dadurch gekennzeichnet, dass** die Drehachse (24) in der Aufnahmestellung vertikal oder unter einem Winkel von bis zu 5°, 10°, 20°, 30° oder 45° zur Vertikalen angeordnet ist.

3. Vorrichtung nach einem der vorangehenden Ansprüche, **dadurch gekennzeichnet, dass** die Hakeneinrichtung (14) auf oder benachbart zu einer horizontalen Plattform (12) der Vorrichtung zum Ziehen eines Transportbehälters (30) auf die Plattform (12) angeordnet ist.

4. Vorrichtung nach einem der vorangehenden Ansprüche, **dadurch gekennzeichnet, dass** eine Verdichterwalze (50) gelenkig an der Vorrichtung gelagert ist und in einen offenen Transportgehälter (30) bringbar und in dieser hin- und herbewegbar ist.

5. Vorrichtung nach einem der vorangehenden Ansprüche, **dadurch gekennzeichnet, dass** die Hakeneinrichtung (14) in einem Frontbereich (9) und in einem Heckbereich (7) der Vorrichtung (2) angeordnet ist.

6. Vorrichtung nach einem der vorangehenden Ansprüche, **dadurch gekennzeichnet, dass** auf dem Fahrgestell (4) ein Führerhaus (10) angeordnet ist, von dem aus der Aufnahmehaken (22) einer im Frontbereich (9) der Vorrichtung (2) angeordneten Hakeneinrichtung (14) zumindest in der Aufnahmestellung von einem sitzenden Fahrer sichtbar ist.

7. Vorrichtung nach einem der vorangehenden Ansprüche, **dadurch gekennzeichnet, dass** der Aufnahmehaken (22) bezüglich einer Drehung um die Drehachse (24) eine Neutralstellung aufweist, in der er mit dem Aufnahmearm (18) fluchtet, wobei ein insbesondere federbetätigtes Rückstellmittel (70) zwischen dem Aufnahmearm (18) und dem Aufnahmehaken (22) angeordnet ist, dass bei einer Verdrehung des Aufnahmehakens (22) aus der Neutralstellung eine Rückstellkraft in Richtung auf die Neutralstellung auf den Aufnahmehaken (22) aufbringt.

8. Vorrichtung nach einem der vorangehenden Ansprüche, **dadurch gekennzeichnet, dass** der Aufnahmehaken (22) einen Hakenkörper (74) und einen damit verbundenen, ein Hakenmaul (77) mit einer Aufnahmeöffnung bildenden Hakenarm (76) aufweist.

9. Vorrichtung nach einem der vorangehenden Ansprüche, **dadurch gekennzeichnet, dass** der Aufnahmehaken (22) einen Lastaufnahmebereich (78) aufweist, der durch eine Oberseite des Hakenarms (76) gebildet ist, wobei die Drehachse (24) durch den Lastaufnahmebereich oder in einem Abstand von dem Lastaufnahmebereich (78) an einem Punkt zwischen diesem und der Schwenkachse (16) verläuft.

## Claims

1. Mobile device (2) for the moving of transport containers (30) provided on an end face with a coupling facility (32), comprising an undercarriage (4), on which at least one wheel (6) driveable by means of a drive means and at least one wheel (8) controllable by means of a steering means are arranged, and, supported on the undercarriage (4), a hooking facility (14) pivotable about a horizontal pivot axis (16) between a rest position and a pickup position, where the hooking facility (14) has a pickup arm (18) pivotable about the horizontal pivot axis (16) with a pickup hook (22) rotatably supported thereon about a rotational axis (24) and where the rotational axis (24) is disposed perpendicularly to and at a distance from the horizontal pivot axis (16), and **characterized in that** the rotational axis (24) is positionally fixed in relation to the pickup arm (18).

2. Device in accordance with Claim 1, **characterised in that** in the pickup position the rotational axis (24) is disposed vertically or at an angle of up to 5°, 10°, 20°, 30° or 45° to the vertical.

3. Device in accordance with one of the preceding Claims, **characterised in that** the hooking facility (14) is arranged on or adjacent to a horizontal platform (12) of the device for the purpose of pulling a transport container (30) onto the platform (12).

4. Device in accordance with one of the preceding Claims, **characterised in that** a compaction roller (50) is swivel-mounted on the device and can be introduced into an open transport container (30) and moved back and forth therein.

5. Device in accordance with one of the preceding Claims, **characterised in that** the hooking facility (14) is arranged in a front area (9) and in a rear area (7) of the device (2).

6. Device in accordance with one of the preceding Claims, **characterised in that** on the undercarriage (4) a driver's cab (10) is situated from which, at least when in the pickup position, the pickup hook (22) of a hooking facility (14) arranged in the front area (9) of the device (2) can be seen by a seated driver.

7. Device in accordance with one of the preceding Claims, **characterised in that** the pickup hook (22) lies in a neutral position relative to a rotation about the rotational axis (24), in which position it is aligned with the pickup arm (18), and that between the pickup arm (18) and the pickup hook (22) an in particular spring-actuated restoring means (70) is arranged in such a way that, on twisting of the pickup hook (22) out of this neutral position, it applies to the pickup hook (22) a restoring force acting in the direction of the neutral position.

8. Device in accordance with one of the preceding Claims, **characterised in that** the pickup hook (22) has a hook body (74) and, adjoining it, a hook arm (76) forming a hook mouth (77) with a receiving opening.

9. Device in accordance with one of the preceding Claims, **characterised in that** the pickup hook (22) has a load receiving area (78), which is formed by an upper surface of the hook arm (76), such that the rotational axis (24) runs through the load receiving area or at a distance from the load receiving area (78) at a point between this and the horizontal pivot axis (16).

## Revendications

1. Dispositif mobile (2) servant à déplacer des conteneurs de transport (30) prévus sur une surface d'extrémité avec un dispositif de raccordement (32) comportant un châssis de roulement (4) sur lequel sont disposés au moins un ensemble de roues (6) commandées au moyen d'une unité d'entraînement et au moins un ensemble de roues (8) contrôlées par un moyen de direction et, porté sur le châssis de roulement (4), un dispositif d'accrochage (14) capable de pivoter autour d'un axe de pivotement horizontal (16) entre une position de repos et une position de ramassage, où le dispositif d'accrochage (14) est doté d'un bras de ramassage (18) qui peut pivoter autour de l'axe de pivotement horizontal (16) le crochet d'accrochage (22) étant porté sur ce bras de ramassage autour d'un axe de rotation (24) et l'axe de rotation (24) étant disposé perpendiculairement par rapport à l'axe de pivotement horizontal (16) et à une certaine distance de celui-ci, et **caractérisé en ce que** l'axe de rotation (24) occupe une position fixe par rapport au bras de ramassage (18).

2. Dispositif selon la revendication 1, **caractérisé en ce que** dans la position de récupération, l'axe de rotation (24) est disposé à la verticale ou bien à un angle allant jusqu'à 5°, 10°, 20°, 30° ou 45° par rapport à la verticale.

3. Dispositif selon l'une quelconque des revendications précédentes, **caractérisé en ce que** le crochet de récupération (14) est disposé sur ou à proximité d'une plateforme horizontale (12) faisant partie du dispositif, ceci dans le but de tirer un conteneur de transport (30) jusque sur la plateforme (12).

4. Dispositif selon l'une quelconque des revendications précédentes, **caractérisé en ce qu'**un rouleau de compaction (50) est monté par pivots tournants sur le dispositif et peut être introduit dans un conteneur de transport ouvert (30) et y être déplacé en avant et en arrière.

5. Dispositif selon l'une quelconque des revendications précédentes, **caractérisé en ce que** le crochet de récupération (14) est disposé dans une zone avant (9) et une zone arrière (7) du dispositif (2).

6. Dispositif selon l'une quelconque des revendications précédentes, **caractérisé en ce que**, sur le châssis de roulement (4), une cabine du conducteur (10) se trouve située, à partir de laquelle, du moins en ce qui concerne la position de récupération, le crochet (22) d'un dispositif de récupération (14) disposé dans la zone avant (9) du dispositif (2) peut être vu par le conducteur qui est assis sur son siège.

7. Dispositif selon l'une quelconque des revendications précédentes, **caractérisé en ce que** le crochet (22) de récupération se trouve dans une position neutre par rapport à la rotation autour de l'axe de rotation (24), et dans cette position il est aligné avec le bras de récupération (18), et **en ce que**, entre le bras de récupération (18) et le crochet (22) de récupération, un moyen de rétablissement (70) particulièrement actionné par ressort se trouve disposé de telle manière que, en tordant le crochet (22) de récupération hors de cette position neutre, une force de rétablissement est appliquée au crochet (22) de récupération qui agit dans le sens de la position neutre.

8. Dispositif selon l'une quelconque des revendications précédentes, **caractérisé en ce que** le crochet (22) de récupération comporte un corps de crochet (74) et, à côté de ce corps un bras de crochet (76) qui constitue une embouchure de crochet (77) ayant une ouverture réceptrice.

9. Dispositif selon l'une quelconque des revendications précédentes, **caractérisé en ce que** le crochet (22) de récupération comporte une zone de réception de la charge (78) qui est formée par une surface supérieure du bras d'accrochage (76), de telle sorte que l'axe de rotation (24) traverse la zone réceptrice de la charge, ou bien à une certaine distance de la zone réceptrice de la charge (78), en un endroit situé entre ce point et l'axe de pivotement horizontal (16).
